# EUROPEAN PATENT SPECIFICATION

(11) **EP 4 553 133 B1**
(45) Date of publication and mention of the grant of the patent: **14.10.2026**
(21) Application number: 24847160.9
(22) Date of filing: 15.07.2024
(51) Int. Cl.: C10G 1/00, C10G 1/10, C10G 45/28, C10G 49/20

(54) **METHOD OF PREPARING PYROLYSIS FUEL OIL FROM WASTE PLASTICS**
VERFAHREN ZUR HERSTELLUNG VON PYROLYSEHEIZÖL AUS KUNSTSTOFFABFÄLLEN
PROCÉDÉ DE PRÉPARATION DE MAZOUT DE PYROLYSE À PARTIR DE DÉCHETS PLASTIQUES

(30) Priority: 05.09.2023 KR 20230117692; 11.07.2024 KR 20240091880
(43) Date of publication of application: 14.05.2025
(73) Proprietor: LG Chem, Ltd., Seoul 07336 (KR)
(72) Inventor: LEE, Sung Ho, Daejeon 34122 (KR); LEE, Sang Beom, Daejeon 34122 (KR); JEONG, Jun Kyo, Daejeon 34122 (KR); AN, Ji Won, Daejeon 34122 (KR)
(74) Representative: Goddar, Heinz J.
(86) International application number: PCT/KR2024/010076
(87) International publication number: WO 2025/053419

(56) References cited:
- WO-A1-2023/052765
- CN-A- 109 868 147
- DE-A1- 19 547 259
- JP-A- 2023 525 285
- KR-A- 20090 028 173
- KR-A- 20090 108 414
- KR-A- 20180 031 121
- KR-A- 20220 091 545
- KR-A- 20230 078 287
- US-A1- 2013 060 070
- US-A1- 2022 010 221

## Description

### [Technical Field]

The present invention relates to a method of preparing pyrolysis oil from waste plastics, and more particularly, to a method of preparing high-quality light hydrocarbon oil by reducing the amount of olefins in waste plastic pyrolysis oil.

### [Background Art]

Recently, the development and use of plastics having physical properties required for various applications and purposes have increased. Plastics require a lot of energy from crude oil extraction to preparation, and a large amount of carbon is emitted in the process. Furthermore, even when plastics used in various products are discarded, environmental pollution and enormous disposal costs occur, and thus, recycling of waste plastics has become an important social issue.

In general, methods of recycling waste plastics (resins) include mechanical recycling, chemical recycling, and thermal recycling. Mechanical recycling is a method of crushing and selecting collected waste plastics, separating the waste plastics by type, melting the waste plastics using an extruder, and mixing the waste plastics with a new material at a certain ratio or adding a functional additive when pelletizing the waste plastics to produce a resin product. Chemical recycling is a method of extracting only a specific polymer using various chemical means, or recovering and repolymerizing pure single molecules. Thermal recycling is a method of burning waste plastics and recovering the waste plastics as heat energy.

In particular, chemical recycling may reduce greenhouse gases compared to incineration of waste plastics and has recently received attention in terms of alternative fuel development.

Specifically, for chemical recycling of waste plastics, when a melt of waste plastics (WPs) such as a polyethylene or polypropyl material is fed to a reactor and pyrolyzed at a certain temperature, and the pyrolysis product is fed to a separation tower and subjected to a refining process in which the pyrolysis product is separated according to boiling point, C₅₋₁₂ light oil (LO) such as naphtha, longer chain heavy oil (HO), and high-boiling point residual oil (RO) may be obtained. However, light oil such as naphtha obtained through such a process has a problem with a high amount of olefins. The olefins included in the naphtha promote the production of tar when introduced into a naphtha cracking center (NCC) process, causing coking. Therefore, when an amount of olefins in naphtha is high, a product yield and quality may be reduced when introduced into the NCC.

Accordingly, a method of converting olefins into paraffins using hydrogen gas has been proposed to reduce the amount of olefins, but hydrogen gas is expensive and facilities for recycling unreacted hydrogen gas are also expensive, and this method is not economically feasible to apply to an actual process.

Therefore, when light hydrocarbon oil such as naphtha is prepared, there is a need for a technique of reducing an amount of olefins.

US 2022/010221 A1 discloses a process for pyrolysis for a polyethylene-containing plastic feedstock, whereby a hydrogen donor is fed from the top.

DE 19 547 259 A1 discloses adding methanol to a feedstock comprising polypropylene and melting and pyrolysing said feedstock.

US 2013/060070 A1 discloses a catalytic plastic pyrolysis process that feeds a lower alcohol or ether.

### [Disclosure]

### [Technical Problem]

In order to solve the problems mentioned in the background art, an object of the present invention is to prepare high-quality high-value-added light oil by reducing an amount of olefins in waste plastic pyrolysis oil.

However, the problems to be solved by the present application are not limited to the object described above, and other problems not described will be clearly understood by those skilled in the art from the following description.

### [Technical Solution]

In one general aspect, a method of preparing pyrolysis oil from waste plastics includes preparing a waste plastic raw material; supplying the waste plastic raw material through a lower portion of a reaction distillation tower and performing pyrolysis to produce pyrolysis gas; supplying a hydrogen donor stream through an upper portion of the reaction distillation tower and reacting the hydrogen donor stream with the pyrolysis gas; and discharging the pyrolysis gas reacted with the hydrogen donor stream through the upper portion and condensing the discharged pyrolysis gas to obtain liquid oil, wherein the hydrogen donor stream is fed to a stage corresponding to 15% to 60% of the theoretical number of stages from the upper portion of the reaction distillation tower.

Further embodiments are disclosed in the dependent claims.

### [Advantageous Effects]

According to the method of preparing pyrolysis oil from waste plastics of the present invention, high-quality light hydrocarbon oil may be obtained by reducing an amount of olefins in the pyrolysis oil using an inexpensive hydrogen donor compound without using expensive hydrogen (H₂) gas.

In addition, the amount of olefins in the pyrolysis oil is lowered, such that tar production may be prevented from being promoted when light hydrocarbon oil is introduced into the NCC process.

Furthermore, the reaction distillation tower is used, such that the pyrolysis process of waste plastics and the refining process of separating the pyrolysis oil step by step by boiling point difference may be performed in one device, and the unreacted hydrogen donor compound may be easily recycled, which may improve economic feasibility.

The effects that may be obtained by the present application are not limited to the effects described above, and other effects not described above may be clearly understood by those skilled in the art to which the present invention pertains from the following description.

### [Description of Drawings]

FIG. 1 is a flowchart of a process of preparing pyrolysis oil from waste plastics according to an embodiment.
FIG. 2 is a flowchart of a process of preparing pyrolysis oil from waste plastics according to an embodiment.

### [Detailed Description]

The terms and words used in the description and claims of the present invention are not to be construed limitedly as having general or dictionary meanings but are to be construed as having meanings and concepts meeting the technical idea of the present invention, based on a principle that the inventors are able to appropriately define the concepts of terms in order to describe their own inventions in the best mode.

With regard to the description of the drawings, similar reference numerals may be used to refer to similar or related components.

A singular form of a noun corresponding to an item may include one or more of the items, unless the relevant context clearly indicates otherwise.

In the present disclosure, each of such phrases as "A or B", "at least one of A and B", "at least one of A or B", "A, B, or C", "at least one of A, B, and C", and "at least one of A, B, or C" may include any one of, or all possible combinations of the items enumerated together in one of the corresponding phrases.

The term "and/or" includes a combination of a plurality of related components or any one of the plurality of related components.

The terms such as "1st" and "2nd" or "first" and "second" may be used to simply distinguish a corresponding component from another component, and does not limit the corresponding components in other aspect (for example, importance or order).

In addition, the terms such as "front surface", "rear surface", "upper surface", "lower surface", "side surface", "left side", "right side", "upper portion", and "lower portion" used in the present application are defined based on the drawings, and the shape and position of each component are not limited by the terms.

The terms "include" or "have" specify the presence of features, numerals, steps, operations, components, parts described in the present disclosure, or a combination thereof, but do not preclude the presence or addition of one or more other features, numerals, steps, operations, components, parts, or a combination thereof.

When a component is said to be "connected", "coupled", "supported", or "contacted" with another component, this includes not only when components are directly connected, coupled, supported, or contacted, but also when components are indirectly connected, coupled, supported, or contacted through a third component.

When a component is "on" another component, this includes not only when the component is in contact with another component, but also when there is another component between two components.

In addition, the terms "about" and "substantially" used in the present application are used in a numerical value or in the vicinity of the numerical value in the meanings mentioned when inherent manufacturing and material allowable errors are presented, and are used to prevent unscrupulous infringers from illegally using the accurate or absolute numbers disclosed in the present invention to help understanding of the present invention.

The term "stream" used in the present application may refer to a flow of a fluid in a process, and may also refer to a fluid flowing through a pipe itself. Specifically, the stream may refer to both a fluid flowing through a pipe connecting respective devices to each other itself and a flow of a fluid. In addition, the fluid may include any one or more components of gas, liquid, and solid.

The term "Cₙ" used in the present application refers to all hydrocarbons having n carbon atoms. For example, "C₅₋₁₂" refers to all hydrocarbon molecules having 5 to 12 carbon atoms, "C₁₃₋₂₂" refers to all hydrocarbon molecules having 13 to 22 carbon atoms, and "C₂₃₋₄₀" refers to all hydrocarbon molecules having 23 to 40 carbon atoms.

The term "liquid oil" used in the present application refers to a product obtained by converting a gaseous stream obtained in a pyrolysis step into a liquid phase by condensation, and may also be referred to as "liquid distilled oil".

The "pressure" referred to in the present application refers to gauge pressure measured based on atmospheric pressure.

The "boiling point" referred to in the present application refers to a boiling point at atmospheric pressure (1 bar).

The pyrolysis gas referred to in the present application refers to gaseous pyrolysis oil.

A method of preparing pyrolysis oil from waste plastics according to an embodiment of the present invention includes (A) preparing a waste plastic raw material, (B) pyrolyzing the waste plastic raw material, (C) removing olefins by a hydrogen donor compound, and (D) obtaining liquid oil by condensation.

Hereinafter, the method of preparing pyrolysis oil from waste plastics according to the present invention will be described in detail for each step with reference to the drawings.

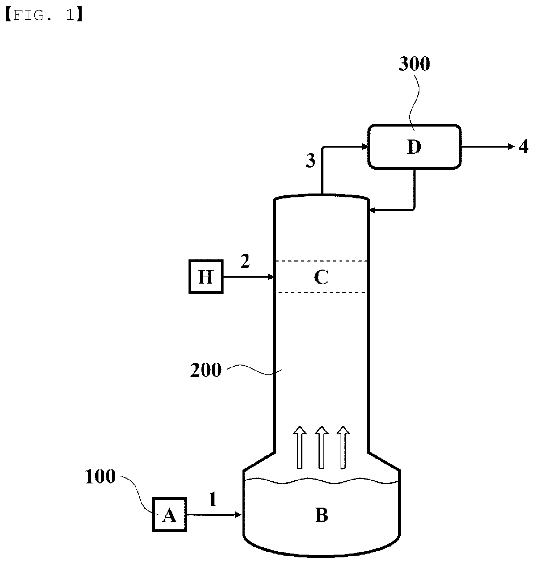

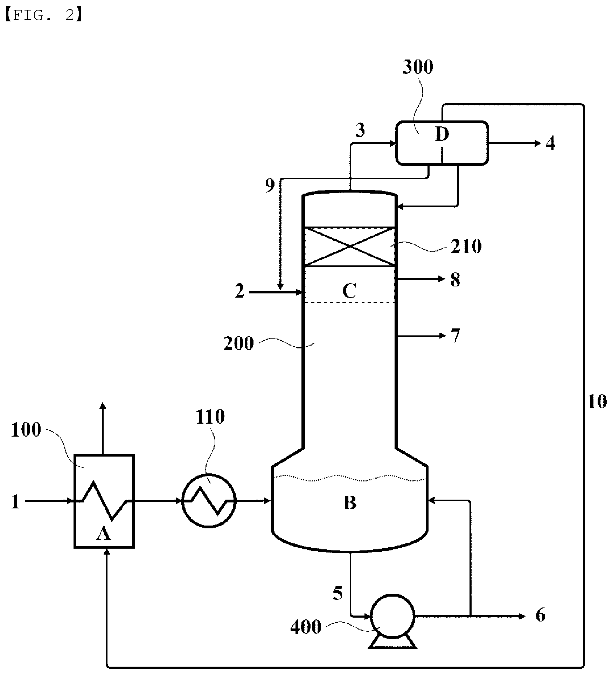

FIGS. 1 and 2 are flowcharts of a process of preparing pyrolysis oil from waste plastics according to an embodiment.

First, a waste plastic raw material 1 is prepared (A).

The waste plastic raw material 1 may include a natural polymer, a synthetic polymer, or a mixture thereof, and the synthetic polymer may include thermoplastic resins such as polyethylene (PE), polypropylene (PP), and polystyrene. In addition, the thermoplastic resin may be a mixture of other types of resins such as polyvinyl chloride (PVC) and polyethylene terephthalate (PET), a thermosetting resin, and the like.

The waste plastic raw material 1 such as these materials may be subjected to, after collecting and selecting, a pretreatment process including crushing, washing, drying, and melting. The pretreatment process may be performed by a general method in the art.

For example, a size of crushed waste plastic is not particularly limited, but the waste plastic raw material may typically be crushed in a size range of about 0.5 cm to 6.0 cm. Thereafter, the washed and dried waste plastic crushed material may be put into an incinerator 100 as illustrated in FIG. 2 or a tubular melter such as an extruder and then melted. The extruder has an extrusion function by melting and kneading, and may be, for example, a twin-screw extruder.

When the waste plastic raw material 1 is a thermoplastic resin, for example, polyethylene, polypropylene, or a mixture thereof, a melting temperature may be about 120°C to 400°C, and preferably about 320°C to 380°C, but is not limited thereto. The higher the melting temperature, the lower the viscosity of the melted waste plastic, which has the advantage of being able to transfer a fluid using a pump.

Meanwhile, referring to FIG. 2, the waste plastic melt may be heated by a heating means 110 provided outside a reaction distillation tower 200, which will be described below, before being fed to the reaction distillation tower 200. The heating means 110 may be located upstream of the reaction distillation tower 200 and may be used as a heat source for the pyrolysis reaction of waste plastics. For example, the heating means 110 may be an electric heater that transfers high-temperature heat to waste plastics by passing high-temperature/high-pressure steam, hot water, a heat transfer fluid, or the like through a jacket, and there is no particular limitation on the heating means. For example, through the heating means 110, the waste plastic melt may be heated to a temperature of higher than about 400°C to 450°C, and specifically, about 420°C to 430°C, for a pyrolysis reaction in a reaction distillation tower 200, which will be described below. Meanwhile, for the purpose of maintaining the temperature of the reaction distillation tower 200, a reboiler (not illustrated) may be additionally provided outside the reaction distillation tower 200.

Subsequently, the waste plastic melt obtained through the pretreatment process is fed through a lower portion of the reaction distillation tower 200 as a raw material and then pyrolyzed to produce pyrolysis gas (B).

The reaction distillation tower 200 is a multi-stage distillation tower equipped with a plurality of trays (not illustrated), and in a sump area at the lower portion of the reaction distillation tower 200, the pyrolysis reaction (B) of the waste plastic raw material 1 may be performed to produce pyrolysis gas, and a refining process of separating the pyrolysis gas into gas and liquid step by step by boiling point difference may be performed. The number of stages and size of the reaction distillation tower are not particularly limited, and may be set based on the theoretical number of stages inferred from a distillation curve considering a composition of the waste plastic raw material. Here, the "theoretical number of stages" refers to the number of virtual sections or stages in the reaction distillation tower where two phases such as a gas phase and a liquid phase are in equilibrium with each other. For example, the reaction distillation tower 200 may have a multi-stage structure including 20 to 50 stages. Since the temperature gradually decreases toward the upper stage of the reaction distillation tower, relatively high-boiling point hydrocarbon components may be separated at a stage located at the lower portion, and relatively low-boiling point hydrocarbon components may be separated at a stage located at the upper portion.

Referring to FIGS. 1 and 2, the waste plastic raw material 1 is fed to a sump at the lower portion of the reaction distillation tower 200, and the pyrolysis reaction (B) of the waste plastic raw material 1 is performed in the sump to produce pyrolysis gas. Here, the sump may refer to an area in which a liquid raw material is accommodated at the bottom below the lowermost tray of the reaction distillation tower 200. In addition, the waste plastic raw material 1 may be fed below the liquid level of the waste plastic raw material accommodated in the sump of the reaction distillation tower.

In a general waste plastic pyrolysis process, a waste plastic raw material is pyrolyzed in a reactor and then naphtha in pyrolysis oil is separated in a distillation device. On the other hand, in the present invention, the reaction distillation tower 200 is used, such that an efficient process may be configured by integrating facilities for the pyrolysis and separation processes of waste plastics. In addition, since a temperature at which a hydrogen donor compound, which will be described below, reacts with the pyrolysis gas is about 200°C to 350°C, a separate temperature control facility is required to react the pyrolysis gas with the hydrogen donor compound in the conventional method. On the other hand, when the reaction distillation tower 200 is used as in the present invention, the pyrolysis gas may react with the hydrogen donor compound by introducing the hydrogen donor compound into a stage representing the above temperature range without a separate facility. Furthermore, when a general reactor is used, since the pyrolysis reaction continues during a residence time of the waste plastics in the reactor, naphtha produced before the residence time in the reactor has elapsed may be excessively decomposed, and thus, a final naphtha yield may be reduced. On the other hand, when the reaction distillation tower 200 is used as in the present invention, naphtha, which is pyrolyzed first in the sump where the pyrolysis reaction is in progress, comes out immediately without additional pyrolysis and moves to the upper distillation separation stage, and thus, the occurrence of the excessive decomposition reaction may be suppressed, improving the naphtha yield.

In an embodiment of the present invention, the pyrolysis reaction of the waste plastic melt may be performed at a temperature of higher than about 400°C to 450°C, and specifically, about 420°C to 430°C, but is not limited thereto. The waste plastics may be a mixture including a thermoplastic resin, for example, polyethylene, polypropylene, or a mixture thereof. For example, the waste plastics may be a mixture including polyethylene having a number average molecular weight (Mn) of about 10,000 to 500,000 and/or polypropylene having a number average molecular weight of about 5,000 to 300,000, but is not limited thereto. Considering that the waste plastic is a thermoplastic resin, when the pyrolysis temperature is 400°C or lower, a pyrolysis rate may be slow, and when the pyrolysis temperature is higher than 450°C, the pyrolysis rate may be fast, but an excessive amount of solid carbide such as char may be generated due to a high temperature.

In addition, considering the naphtha yield, an internal operating pressure of the reaction distillation tower 200 for the pyrolysis reaction may be adjusted to a range of about 1 to 20 bar, and specifically, about 1 bar to 5 bar. When the above operating pressure is satisfied, it is possible to minimize excessive pyrolysis of naphtha or failure to convert the waste plastics into naphtha during pyrolysis.

In an embodiment of the present invention, a pyrolysis product obtained by pyrolyzing the waste plastic melt may include pyrolysis gas including non-condensable C₁₋₄ components, C₅₋₁₂ light components such as naphtha that may be converted into liquid oil by condensation, and longer chain heavy hydrocarbon components, and a high-boiling point residue that is not completely decomposed and is thus not vaporized.

In addition, the low molecular weight components produced by the pyrolysis may include saturated and unsaturated hydrocarbons. Here, the low molecular weight component may refer to a light hydrocarbon having 12 or fewer carbon atoms, and more specifically, the saturated hydrocarbon of the low molecular weight component may include naphtha, and the unsaturated hydrocarbon of the low molecular weight component may refer to an olefin having 12 or fewer carbon atoms. For example, the low molecular weight components may include about 60 vol% to 90 vol% of light saturated hydrocarbons and about 10 vol% to 40 vol% of light unsaturated hydrocarbons, and preferably, about 80 vol% to 90 vol% of light saturated hydrocarbons and about 10 vol% to 20 vol% of light unsaturated hydrocarbons, with respect to the total volume of the low molecular weight components produced by the pyrolysis, but are not limited thereto.

Through the pyrolysis reaction (B), pyrolysis gas may be produced in an amount of 20 wt% to 90 wt% or 25 wt% to 80 wt% of the total weight of the waste plastic raw material, and may move to the upper portion of the reaction distillation tower 200, and a high-boiling point residue that is not vaporized remains at the lower portion of the reaction distillation tower 200. Specifically, the product pyrolyzed in the pyrolysis step (B) may include about 10 wt% to 60 wt% of C₅₋₁₂ light hydrocarbons, 30 wt% to 50 wt% of C₁₃₋₄₀ heavy hydrocarbons, and 10 wt% to 50 wt% of a higher than C₄₀ high-boiling point residue.

More specifically, the pyrolysis gas may be a gaseous stream including C₁₋₄ hydrocarbons, C₅₋₁₂ light hydrocarbons, C₁₃₋₂₂ medium hydrocarbons, and C₂₃₋₄₀ heavy hydrocarbons. Among them, C₁₋₄ hydrocarbons such as methane, ethane, and propane are separated by evaporation due to non-condensability, and the remaining hydrocarbons are condensed to obtain liquid distilled oil. Meanwhile, the high-boiling point residue that is not vaporized may be discharged as a lower discharge stream 4 of the reaction distillation tower 200.

Meanwhile, the method may further include, before or after supplying a hydrogen donor stream 2, which will be described below, a process of separating and refining a portion of the pyrolysis gas at an arbitrary stage in the reaction distillation tower 200, if necessary. Specifically, in the pyrolysis gas produced in the pyrolysis step (B), hydrocarbon components having a boiling point of about 200°C or higher may be separated and refined.

In an embodiment of the present invention, as illustrated in FIG. 2, the method may further include a step of separating one or more hydrocarbon components of hydrocarbon components 7 having a boiling point of 350°C to 570°C and hydrocarbon components 8 having a boiling point of 200°C to lower than 350°C in the pyrolysis gas produced in the pyrolysis step (B).

More specifically, the hydrocarbon components 7 having a boiling point of 350°C to 570°C may include C₂₃₋₄₀ heavy oil (HO), and the hydrocarbon components 8 having a boiling point of 200°C to lower than 350°C may include C₁₃₋₂₂ middle oil (MO).

Specifically, in order to separate the hydrocarbon components 7 having a boiling point of 350°C to 570°C from the pyrolysis gas, a process of separating and discharging C₂₃₋₄₀ heavy oil in the upstream of supplying of a hydrogen donor stream 2, which will be described below, is performed, such that hydrocarbon components having a relatively high boiling point may be obtained, but the present invention is not limited thereto. In addition, in order to separate the hydrocarbon components 8 having a boiling point of 200°C to 350°C from the pyrolysis gas, a process of separating and discharging C₁₃₋₂₂ middle oil in the downstream of supplying of a hydrogen donor stream 2, which will be described below, is performed, such that hydrocarbon components having a relatively low boiling point may be obtained, but the present invention is not limited thereto.

For example, referring to FIG. 2, in a case where the hydrocarbon components 8 having a boiling point of 200°C to 350°C and the hydrocarbon components 7 having a boiling point of 350°C to 570°C are all separated from the pyrolysis gas, while the pyrolysis gas produced at the lower portion of the reaction distillation tower 200 moves to the upper portion, first, the hydrocarbon components 7 having a relatively high boiling point may be separated to obtain C₂₃₋₄₀ heavy oil (HO), and then, the hydrocarbon components 8 having a relatively low boiling point may be separated to obtain C₁₃₋₂₂ middle oil (MO). In addition, after the separation process, the remaining pyrolysis gas moves to the top of the reaction distillation tower 200 as a gaseous stream including hydrocarbon components having a boiling point of lower than about 200°C.

Meanwhile, referring to FIG. 2, the high-boiling point residue that is not vaporized in the pyrolysis product may be discharged through a lower discharge stream 5 of the reaction distillation tower using a liquid pump 400 due to its high viscosity. The high-boiling point residue is underutilized because it causes process operation problems or deteriorates the quality of the final product.

More specifically, the lower discharge stream 5 of the reaction distillation tower 200 may be fractionated and discharged as a liquid stream including a high-boiling point residue 6, and the remaining liquid stream may be recycled to the reaction distillation tower 200. Meanwhile, the high-boiling point residue 6 at the lower portion of the reaction distillation tower may be discharged in the form of a highly viscous wax. Here, the recycling of the lower discharge stream of the reaction distillation tower 200 may be performed to secure a sufficient flow rate so as to prevent fouling in the pipe due to char. Furthermore, the lower discharge stream 5 may be connected to a reboiler (not illustrated) additionally provided outside the reaction distillation tower to reduce the production of char while maintaining a fluid temperature at the lower portion of the reaction distillation tower 200, but is not limited thereto.

Subsequently, a hydrogen donor stream 2 is fed through the upper portion of the reaction distillation tower 200 and reacts with the pyrolysis gas (C).

In an embodiment of the present invention, the hydrogen donor stream 2 includes a hydrogen donor compound. The hydrogen donor compound is a donating compound that provides hydrogen to an olefin, which is an unsaturated hydrocarbon, plays a role in converting a double bond of the olefin in the pyrolysis gas into paraffin by substituting the double bond with hydrogen, and includes at least one compound other than hydrogen (H₂). Specifically, the hydrogen donor compound may include at least one functional group of a hydroxyl group (-OH) and a carboxyl group (-COOH), and may be a compound having a boiling point of about 30°C to 200°C. For example, the hydrogen donor compound may include one or more compounds selected from low molecular weight alcohols having 1 to 8 carbon atoms, ethylene glycol, and formic acid.

In the pyrolysis oil produced during the pyrolysis of waste plastics, an oil fraction that is vaporized into light hydrocarbons (for example, naphtha) having a boiling point of 50°C to lower than 200°C contains a large amount of olefins. When pyrolysis oil having a high amount of olefins is used in a naphtha cracking center (NCC) process, there is a problem of causing tar production. Accordingly, in the present invention, as illustrated in FIG. 1, the hydrogen donor stream 2 is fed to an arbitrary stage at the upper portion of the reaction distillation tower 200 to react an olefin included in the pyrolysis gas with a hydrogen donor compound (H-donor), and through the reaction, a double bond of the olefin, which is an unsaturated hydrocarbon, is substituted with hydrogen to convert the double bond into paraffin, such that an amount of olefins in the pyrolysis gas may be reduced. In this case, the paraffin produced by the hydrogen substitution reaction may be discharged together with the hydrocarbon components 8 having a boiling point of 200°C to lower than 350°C, or may be discharged together with the hydrocarbon components 4 having a boiling point of 50°C to lower than 200°C, but is not limited thereto.

According to the present invention, the hydrogen donor stream 2 is fed to a stage corresponding to 15% to 60%, preferably 15% to 50%, and more preferably 15% to 40%, of the theoretical number of stages from the upper portion of the reaction distillation tower 200. For example, when the theoretical number of stages of the reaction distillation tower is 100, the uppermost stage may be the 1st stage and the lowermost stage may be 100th stage, and the stage corresponding to 50% or less of the theoretical number of stages may refer to the 1st stage to the 50th stage of the reaction distillation tower. When the hydrogen donor stream 2 is fed to the stage in the above range of the reaction distillation tower 200, the condition of excellent reactivity between the olefins and the hydrogen donor compound (H-donor) may be satisfied, and therefore, an olefin removal rate may be improved.

More specifically, in the hydrogen donor stream supplying step (C), the hydrogen donor stream 2 may be introduced into a stage operated in a temperature range of 200°C to 400°C, preferably in a temperature range of 200°C to 380°C, and more preferably in a temperature range of 250°C to 350°C. When the operating temperature of the stage into which the hydrogen donor stream 2 is introduced is too low, the reaction between the olefins in the pyrolysis gas and the hydrogen donor compound (H-donor) may not occur, resulting in a decrease in the olefin removal performance. Meanwhile, the higher the operating temperature is, the more the reactivity between the olefins in the pyrolysis gas and the hydrogen donor compound (H-donor) is improved. However, when the operating temperature of the stage into which the hydrogen donor stream is introduced is too high, the hydrogen substitution reaction between the pyrolysis gas and the hydrogen donor compound may be actually deteriorated.

As described above, pyrolysis oil, including naphtha and the like, generally has a high olefin concentration and causes tar production when used as a feed for the NCC process. Conventionally, a method of converting an olefin into paraffin using hydrogen (H₂) was considered. However, when hydrogen (H₂) gas is used, there is a problem of low economic feasibility due to high hydrogen costs and the high price of a condenser for recycle of the hydrogen (H₂) gas. In order to solve the problems of the related art, in the present invention, a hydrogen donor compound, which is an inexpensive hydrogen source (H-source), is used, eliminating the use of expensive hydrogen (H₂) gas, and furthermore, a general liquid pump may be used when reusing the hydrogen donor compound, which is advantageous in configuring and operating the process with economic feasibility.

In the hydrogen donor stream supplying step (C), the hydrogen donor stream 2 may be introduced at a flow rate ratio of 1:0.01 to 1:1, and preferably, at a flow rate ratio of 1:0.3 to 1:0.5, with respect to the total weight of the waste plastic raw material 1, but is not limited thereto. When the amount of the hydrogen donor stream 2 introduced is too small, the amount of hydrogen donated to the olefins in the pyrolysis gas is insufficient, which may cause deterioration of the olefin removal performance, and when the amount of the hydrogen donor stream 2 introduced is too large, oxides may be produced by the hydrogen donor compound, which may cause a problem of not reaching the naphtha cracker specifications.

In an embodiment of the present invention, as illustrated in FIG. 2, in a case where hydrocarbon components having a boiling point of 200°C or higher are first separated and recovered, the pyrolysis gas may include a high proportion of hydrocarbon components having a boiling point of lower than 200°C when the hydrogen donor stream 2 is fed.

Meanwhile, when the hydrogen donor stream 2 is fed, a reaction catalyst may be further introduced to increase a removal rate of olefins in the pyrolysis gas. Specifically, as illustrated in FIG. 2, a catalyst layer 210 for supplying the reaction catalyst may be provided above the location where the hydrogen donor stream 2 is fed. More specifically, a metallic catalyst may be used as the reaction catalyst to promote the hydrogen substitution reaction between the hydrogen donor stream 2 and the olefins in the pyrolysis gas, and may include, for example, one or more metal components of nickel (Ni), silicon (Si), and aluminum (Al), but is not limited thereto. More specifically, a catalyst in the form of Ni supported on a Si/Al support may be used as the metallic catalyst, wherein the support may promote pyrolysis and the carrier may promote the hydrogen donation reaction.

More specifically, the amount of the reaction catalyst introduced may be about 3 parts by weight or less, and preferably, 0.1 to 2 parts by weight, with respect to 100 parts by weight of the amount of the hydrogen donor stream 2 introduced, but is not limited thereto. By introducing the reaction catalyst, the olefin removal effect may be improved, but when the amount of the reaction catalyst introduced is excessive, an overreaction problem may occur.

Thereafter, the pyrolysis gas reacted with the hydrogen donor stream is discharged through an upper discharge stream 3 and then condensed to obtain liquid oil 4 (D).

The upper discharge stream 3 of the reaction distillation tower 200 may be a gaseous stream including light hydrocarbon components having a boiling point of lower than 200°C and an unreacted hydrogen donor compound, and more specifically, may include non-condensable C₁₋₄ components, C₅₋₁₂ light components such as naphtha that may be converted into liquid oil by condensation, and an unreacted hydrogen donor compound. Furthermore, light components having 12 or fewer carbon atoms may include saturated hydrocarbon components such as naphtha and unsaturated hydrocarbon components such as olefins.

The upper discharge stream 3 of the reaction distillation tower 200 may be obtained as liquid oil 4 through the condensation process after being discharged. The condensation is a process of cooling the pyrolysis gas, and through this, a polymerization reaction of hydrocarbons in the high-temperature pyrolysis gas discharged from the reaction distillation tower 200 may be suppressed and a heat load of a subsequent process may be reduced.

Referring to FIG. 1, when the pyrolysis gas reacted with the hydrogen donor stream is discharged through the upper portion of the reaction distillation tower 200 as the upper discharge stream 3 and fed to a condenser 300, and the upper discharge stream 3 exchanges heat with quench oil or quench water, cooling and condensation occur, such that liquid oil 4 may be obtained. Finally, phase separation with the unreacted hydrogen donor compound may occur in the condenser 300, thereby obtaining liquid oil 4. A cooling temperature by the heat exchange may be about 0°C to 50°C, and specifically, about 20°C to 30°C.

Specifically, the liquid oil obtained in the condensation step (D) may include C₅₋₁₂ light oil (LO) having a boiling point of 50°C to lower than 200°C. More specifically, the liquid oil obtained in the condensation step (D) may include 10 wt% to 60 wt%, and specifically, 30 wt% to 50 wt%, of C₅₋₁₂ light oil, which is a saturated hydrocarbon component, with respect to the total weight of the liquid oil.

Meanwhile, the liquid oil obtained in the condensation step (D) may include 25 vol% or less, specifically, 1 vol% to 20 vol%, and more specifically, 10 vol% to 20 vol%, of olefins, which are unsaturated hydrocarbon components, with respect to the total volume of the liquid oil. As the amount of olefins in the liquid oil obtained in the condensation step (D) is lower, higher purity C₅₋₁₂ light saturated hydrocarbon oil (naphtha) may be obtained, and tar formation that occurs when introduced into the NCC process may be minimized. Furthermore, the liquid oil obtained in the condensation step (D) may further include a residual amount of an unreacted hydrogen donor compound.

In an embodiment of the present invention, the upper discharge stream 3 of the reaction distillation tower transferred to the condenser 300 may include an unreacted hydrogen donor compound, which is a polar component, and C₅₋₁₂ light components, which are non-polar components. Accordingly, in the condensation step (D), the condensed unreacted hydrogen donor compound may be layer-separated from the C₅₋₁₂ light saturated hydrocarbon oil having a different polarity from that of the condensed unreacted hydrogen donor compound, and may be discharged through a first lower discharge stream 9 of the condenser 300.

Referring to FIG. 2, the first lower discharge stream 9 of the condenser 300 including the unreacted hydrogen donor compound may be recycled as the hydrogen donor stream 2 in the hydrogen donor stream supplying step (C). More specifically, in the reaction distillation tower 200, the unreacted hydrogen donor compound may be discharged through the gaseous upper discharge stream 3 together with the pyrolysis gas due to its low boiling point, and may be introduced into the condenser 300 and condensed, and in the condenser 300, the unreacted hydrogen donor compound, which is a polar component, may be layer-separated from the C₅₋₁₂ light saturated hydrocarbon oil, which is a non-polar component, and may be discharged through the first lower discharge stream 9 of the condenser 300 to be reused as the hydrogen donor stream 2 of the reaction distillation tower 200. The first lower discharge stream 9 of the condenser 300 is a liquid stream, and the unreacted hydrogen donor compound may be easily transferred at low cost using a liquid pump, which is advantageous for economic reuse.

In addition, a second lower discharge stream of the condenser 300 including naphtha may be refluxed to the upper portion of the reaction distillation tower 200. The second lower discharge stream is a stream recycled to increase the naphtha purity of the upper discharge stream 3 separated and discharged through the upper portion of the reaction distillation tower 200, and may be refluxed to the upper portion of the reaction distillation tower 200 in a minimum amount satisfying the target naphtha purity.

Meanwhile, in the condensation step (D), an uncondensed gaseous stream 10 may be recycled as a process gas in the raw material preparation step (A). Specifically, in the heat exchange in the condenser 300, the uncondensed gas component, for example, C₁₋₄ hydrocarbon gas, may be discharged through the upper discharge stream 10 of the condenser 300 and used as a process gas. Referring to FIG. 2, the upper discharge stream 10 of the condenser 300 may be used as fuel for the incinerator 100 in the melting process, which is a pretreatment process of the waste plastic raw material. As described above, the process gas 10 is reused and used as fuel for the incinerator 100 without using additional external energy, such that energy usage may be reduced and process efficiency may be increased.

Hereinabove, the method of preparing pyrolysis oil from waste plastics according to the present invention has been described and illustrated with reference to the drawings. However, the description and the illustration of the drawings are for only essential components for understating the present invention, and processes and devices not separately described and illustrated may be properly applicable and used for implementing the method of preparing pyrolysis oil from waste plastics according to the present invention, in addition to the processes and devices described and illustrated in the drawings.

Hereinafter, the present invention will be described in more detail with reference to examples. However, the following examples are provided for illustrating the present invention. It is apparent to those skilled in the art that various modifications and alterations may be made without departing from the scope of the claims.

### [Examples]

### Comparative Example 1

300 parts by weight of a waste plastic melt including polyethylene (PE) and polypropylene (PP) at a weight ratio of 6:4 was placed in a reactor and heated to 430°C to perform a pyrolysis reaction, thereby obtaining pyrolysis oil.

### Example 1

As illustrated in FIG. 1, 300 parts by weight of a waste plastic melt including polyethylene (PE) and polypropylene (PP) at a weight ratio of 6:4 was heated to 430°C using a heater and then fed to a reaction distillation tower 200, and a pyrolysis reaction was performed. Subsequently, 100 parts by weight of formic acid was introduced into a stage corresponding to 15% of the theoretical number of stages from an upper portion of the reaction distillation tower 200, and a reaction was performed at 200°C. That is, in Example 1, a flow rate ratio of the waste plastic melt and the formic acid was 3:1.

### Example 2

The same process as that of Example 1 was performed except that 100 parts by weight of formic acid was introduced into a stage corresponding to 40% of the theoretical number of stages from the upper portion of the reaction distillation tower 200 and a reaction was performed at 350°C. That is, in Example 2, a flow rate ratio of the waste plastic melt and the formic acid was 3:1.

### Example 3

The same process as that of Example 1 was performed except that 150 parts by weight of methanol (MeOH) was introduced into a stage corresponding to 40% of the theoretical number of stages from the upper portion of the reaction distillation tower 200 and a reaction was performed at 350°C. That is, in Example 3, a flow rate ratio of the waste plastic melt and the methanol was 2:1.

### Example 4

The same process as that of Example 1 was performed except that 150 parts by weight of methanol (MeOH) and 2.25 parts by weight of a Ni/SiAl catalyst were introduced into a stage corresponding to 40% of the theoretical number of stages from the upper portion of the reaction distillation tower 200 and a reaction was performed at 350°C. That is, in Example 4, a flow rate ratio of the waste plastic melt, the methanol, and the catalyst was 2:1:0.015.

### Example 5

The same process as that of Example 1 was performed except that 150 parts by weight of methanol (MeOH) was introduced into a stage corresponding to 60% of the theoretical number of stages from the upper portion of the reaction distillation tower 200 and a reaction was performed at 400°C. That is, in Example 3, a flow rate ratio of the waste plastic melt and the methanol was 2:1.

### Experimental Examples: Comparison of Olefin Amounts

In order to confirm the amount of olefins contained in the pyrolysis oil finally obtained from waste plastics in each of Examples 1 to 5 and Comparative Example 1, the bromine number (BN) was measured according to the ASTM D1159 method, and the results are shown in Table 1.

Specifically, the bromine number (g/100 g) is a numerical value that represents unsaturated bonds, represents the amount (g) of bromine substituted at the unsaturated component, that is, the double bond of the olefin in 100 g of the sample. A lower bromine number indicates a lower amount of olefins.

**[Table 1]**

| Classification | Type of H-donor | Based on pyrolysis oil | | Theoretical number of stages into which H-donor is introduced | Reaction temperature (°C) | Bromine number (BN) |
|---|---|---|---|---|---|---|
| | | H-donor weight ratio | Catalyst weight ratio | | | |
| Comparative Example 1 | - | - | - | - | - | 29.9 |
| Example 1 | Formic acid | 1/3 | - | 15% | 200 | 24.1 |
| Example 2 | Formic acid | 1/3 | - | 40% | 350 | 17.2 |
| Example 3 | Methanol | 1/2 | - | 40% | 350 | 21.8 |
| Example 4 | Methanol | 1/2 | 0.0075 | 40% | 350 | 13.5 |
| Example 5 | Methanol | 1/2 | - | 60% | 400 | 25.4 |

Referring to Table 1, it was confirmed that the bromine number of the pyrolysis oil of each of Examples 1 to 5, in which the waste plastics were reacted with formic acid or methanol, which is a hydrogen donor compound, was reduced compared to Comparative Example 1 in which only a pyrolysis reaction was performed on the waste plastics. Through this, it was confirmed that the amount of olefins in the pyrolysis oil was reduced when a reaction with a hydrogen donor compound was performed.

More specifically, in Examples 1 and 2 and Examples 3 and 5, the amounts and types of the hydrogen donor compounds used were the same, but only the reaction temperatures were different.

When comparing Examples 1 and 2, compared to Example 1, in which formic acid was fed to a stage corresponding to 15% of the theoretical number of stages from the upper portion of the reaction distillation tower 200 and the pyrolysis oil and the hydrogen donor compound were reacted at 200°C, the bromine number of Example 2, in which formic acid was fed to a stage corresponding to 40% of the theoretical number of stages from the upper portion of the reaction distillation tower 200 and the reaction was performed at a higher temperature of 350°C, was measured to be lower. This indicates that the higher the operating temperature at the location where the hydrogen donor compound is introduced in the reaction distillation tower, the better the olefin removal effect.

However, when comparing Examples 3 and 5, in the case of Example 5, in which methanol was fed to a stage corresponding to 60% of the theoretical number of stages from the upper portion of the reaction distillation tower 200 and the pyrolysis oil and the hydrogen donor compound were reacted at 400°C, the bromine number was measured to be lower than that in Example 3 in which methanol was fed to a stage corresponding to 40% of the theoretical number of stages from the upper portion of the reaction distillation tower 200 and the reaction was performed at 350°C. This indicates that when the operating temperature at the location where the hydrogen donor compound is introduced in the reaction distillation tower is excessively high, the olefin removal effect may be actually reduced.

Meanwhile, Example 4 is the case in which only a reaction catalyst was further introduced when introducing the hydrogen donor compound in Example 3. When comparing Examples 3 and 4, the bromine number of Comparative Example 4, in which a reaction catalyst was used, was measured to be lower than that in Example 3, in which a reaction catalyst was not used. Therefore, it was confirmed that the olefin removal performance was further improved when a reaction catalyst was introduced in the hydrogen substitution reaction of the olefins and the hydrogen donor compound.

Although the exemplary embodiments of the present invention have been described, the present invention is not limited to these exemplary embodiments, and those skilled in the art will appreciate that various modifications and alterations may be made without departing from the concept and scope of the claims described below.

### [Detailed Description of Main Elements]

1: Waste plastic raw material
2: Hydrogen donor stream
3: Upper discharge stream of reaction distillation tower
4: Hydrocarbon components having boiling point of 50°C to lower than 200°C
5: Lower discharge stream of reaction distillation tower
6: High-boiling point residue
7: Hydrocarbon components having boiling point of 350°C to 570°C
8: Hydrocarbon components having boiling point of 200°C to lower than 350°C
9: First lower discharge stream of condenser
10: Upper discharge stream of condenser
100: Incinerator 110: Heating means
200: Reaction distillation tower 300: Condenser 400: Pump

## Claims

1. A method of preparing pyrolysis oil from waste plastics, the method comprising:
(A) preparing a waste plastic raw material;
(B) supplying the waste plastic raw material through a lower portion of a reaction distillation tower and performing pyrolysis to produce pyrolysis gas;
(C) supplying a hydrogen donor stream through an upper portion of the reaction distillation tower and reacting the hydrogen donor stream with the pyrolysis gas; and
(D) discharging the pyrolysis gas reacted with the hydrogen donor stream through the upper portion and condensing the discharged pyrolysis gas to obtain liquid oil,
wherein the hydrogen donor stream is fed to a stage corresponding to 15% to 60% of the theoretical number of stages from the upper portion of the reaction distillation tower.

2. The method of claim 1, wherein the hydrogen donor stream includes one or more compounds selected from a low molecular weight alcohol having 1 to 8 carbon atoms, ethylene glycol, and formic acid.

3. The method of claim 1, wherein in step (C), the hydrogen donor stream is fed to a stage operated in a temperature range of 200°C to 400°C.

4. The method of claim 1, wherein in step (C), the hydrogen donor stream is fed at a flow rate ratio of 1:0.01 to 1:1 with respect to the total weight of the waste plastic raw material.

5. The method of claim 1, wherein in step (C), a reaction catalyst is further introduced.

6. The method of claim 1, wherein the liquid oil obtained in step (D) includes C₅₋₁₂ light oil (LO) having a boiling point of 50°C to lower than 200°C.

7. The method of claim 6, wherein the liquid oil obtained in step (D) includes olefins in an amount of 25 vol% or less with respect to the total volume of the liquid oil.

8. The method of claim 1, further comprising, before step (C), separating one or more hydrocarbon components of hydrocarbons having a boiling point of 200°C to 350°C and hydrocarbons having a boiling point of 350°C to 570°C in the pyrolysis gas produced in step (B),
wherein the hydrocarbons having a boiling point of 200°C to lower than 350°C include C₁₃₋₂₂ middle oil (MO), and the hydrocarbons having a boiling point of 350°C to 570°C include C₂₃₋₄₀ heavy oil (HO).

9. The method of claim 1, further comprising, in step (D), phase-separating an unreacted hydrogen donor compound from the liquid oil, and recycling the phase-separated unreacted hydrogen donor compound as the hydrogen donor stream in step (C).

10. The method of claim 1, wherein the waste plastic raw material is a mixture including polyethylene (PE) or polypropylene (PP).

11. The method of claim 1, wherein an internal operating pressure of the reaction distillation tower is in a range of 1 bar to 20 bar.

12. The method of claim 1, wherein the reaction distillation tower has a multi-stage structure including 20 to 50 stages.

13. The method of claim 1, wherein a lower discharge stream including a residue is discharged through the lower portion of the reaction distillation tower, and a portion of the lower discharge stream is fractionated and refluxed to the reaction distillation tower.

14. The method of claim 1, wherein step (A) includes melting the waste plastic raw material, and
an uncondensed gaseous stream in step (D) is used as fuel to melt the waste plastic raw material.

## Patentansprüche

1. Verfahren zur Herstellung von Pyrolyseöl aus Kunststoffabfällen, wobei das Verfahren umfasst:
(A) Herstellen eines Kunststoffabfall-Rohmaterials;
(B) Zuführen des Kunststoffabfall-Rohmaterials durch einen unteren Abschnitt eines Reaktionsdestillationsturms und Durchführen einer Pyrolyse, um Pyrolysegas zu erzeugen;
(C) Zuführen eines Wasserstoffdonorstroms durch einen oberen Abschnitt des Reaktionsdestillationsturms und Umsetzen des Wasserstoffdonorstroms mit dem Pyrolysegas; und
(D) Abführen des mit dem Wasserstoffdonorstrom umgesetzten Pyrolysegases durch den oberen Abschnitt und Kondensieren des abgeführten Pyrolysegases, um flüssiges Öl zu erhalten,
wobei der Wasserstoffdonorstrom einer Stufe zugeführt wird, die 15 % bis 60 % der theoretischen Anzahl von Stufen aus dem oberen Abschnitt des Reaktionsdestillationsturms entspricht.

2. Verfahren nach Anspruch 1, wobei der Wasserstoffdonorstrom eine oder mehrere Verbindungen umfasst, die aus einem niedermolekularen Alkohol mit 1 bis 8 Kohlenstoffatomen, Ethylenglykol und Ameisensäure ausgewählt sind.

3. Verfahren nach Anspruch 1, wobei in Schritt (C) der Wasserstoffdonorstrom einer Stufe zugeführt wird, die in einem Temperaturbereich von 200 °C bis 400 °C betrieben wird.

4. Verfahren nach Anspruch 1, wobei in Schritt (C) der Wasserstoffdonorstrom mit einem Strömungsratenverhältnis von 1:0,01 bis 1:1 in Bezug auf das Gesamtgewicht des Kunststoffabfall-Rohmaterials zugeführt wird.

5. Verfahren nach Anspruch 1, wobei in Schritt (C) ferner ein Reaktionskatalysator eingeführt wird.

6. Verfahren nach Anspruch 1, wobei das in Schritt (D) erhaltene flüssige Öl C₅₋₁₂ -Leichtöl (LO) mit einem Siedepunkt von 50 °C bis weniger als 200 °C umfasst.

7. Verfahren nach Anspruch 6, wobei das in Schritt (D) erhaltene flüssige Öl Olefine in einer Menge von 25 Vol.-% oder weniger in Bezug auf das Gesamtvolumen des flüssigen Öls umfasst.

8. Verfahren nach Anspruch 1, ferner umfassend, vor Schritt (C), Trennen einer oder mehrerer Kohlenwasserstoffkomponenten von Kohlenwasserstoffen mit einem Siedepunkt von 200 °C bis 350 °C und Kohlenwasserstoffen mit einem Siedepunkt von 350 °C bis 570 °C in dem in Schritt (B) erzeugten Pyrolysegas,
wobei die Kohlenwasserstoffe mit einem Siedepunkt von 200 °C bis weniger als 350 °C C₁₃₋₂₂ -Mittelöl (MO) umfassen und die Kohlenwasserstoffe mit einem Siedepunkt von 350 °C bis 570 °C C₂₃₋₄₀ -Schweröl (HO) umfassen.

9. Verfahren nach Anspruch 1, ferner umfassend, in Schritt (D), Phasentrennen einer nicht umgesetzten Wasserstoffdonorverbindung von dem flüssigen Öl und Rückführen der phasengetrennten nicht umgesetzten Wasserstoffdonorverbindung als den Wasserstoffdonorstrom in Schritt (C).

10. Verfahren nach Anspruch 1, wobei das Kunststoffabfall-Rohmaterial eine Mischung ist, die Polyethylen (PE) oder Polypropylen (PP) umfasst.

11. Verfahren nach Anspruch 1, wobei ein interner Betriebsdruck des Reaktionsdestillationsturms in einem Bereich von 1 bar bis 20 bar liegt.

12. Verfahren nach Anspruch 1, wobei der Reaktionsdestillationsturm eine mehrstufige Struktur aufweist, die 20 bis 50 Stufen umfasst.

13. Verfahren nach Anspruch 1, wobei ein unterer Abführstrom, der einen Rückstand umfasst, durch den unteren Abschnitt des Reaktionsdestillationsturms abgeführt wird und ein Teil des unteren Abführstroms fraktioniert und zum Reaktionsdestillationsturm refluxiert wird.

14. Verfahren nach Anspruch 1, wobei Schritt (A) das Schmelzen des Kunststoffabfall-Rohmaterials umfasst und
ein nicht kondensierter gasförmiger Strom in Schritt (D) als Brennstoff zum Schmelzen des Kunststoffabfall-Rohmaterials verwendet wird.

## Revendications

1. Procédé de préparation d'huile de pyrolyse à partir de déchets plastiques, le procédé consistant à :
(A) préparer une matière première de déchets plastiques ;
(B) fournir la matière première de déchets plastiques par une partie inférieure de une tour de distillation de réaction et effectuer une pyrolyse pour produire un gaz de pyrolyse ;
(C) fournir un flux donneur d'hydrogène par une partie supérieure de la tour de distillation de réaction et faire réagir le flux donneur d'hydrogène avec le gaz de pyrolyse ; et
(D) décharger le gaz de pyrolyse réagi avec le flux donneur d'hydrogène par la partie supérieure et condenser le gaz de pyrolyse déchargé pour obtenir une huile liquide,
dans lequel le flux donneur d'hydrogène est introduit à un stade correspondant à 15 % à 60 % du nombre théorique de stades de la partie supérieure de la tour de distillation de réaction.

2. Procédé selon la revendication 1, dans lequel le flux donneur d'hydrogène inclut un ou plusieurs composés sélectionnés parmi un alcool à faible poids moléculaire ayant 1 à 8 atomes de carbone, un éthylène glycol et un acide formique.

3. Procédé selon la revendication 1, dans lequel à l'étape (C), le flux donneur d'hydrogène est introduit à un stade fonctionnant dans une plage de température de 200°C à 400°C.

4. Procédé selon la revendication 1, dans lequel à l'étape (C), le flux donneur d'hydrogène est introduit dans un rapport de débit de 1:0,01 à 1:1 pour le poids total de la matière première de déchets plastiques.

5. Procédé selon la revendication 1, dans lequel à l'étape (C), un catalyseur de réaction est introduit en plus.

6. Procédé selon la revendication 1, dans lequel l'huile liquide obtenue à l'étape (D) inclut une huile légère en C₅₋₁₂ (LO) ayant un point d'ébullition de 50°C à inférieur à 200°C.

7. Procédé selon la revendication 6, dans lequel l'huile liquide obtenue à l'étape (D) inclut des oléfines dans une quantité égale ou inférieure à 25 % en volume pour le volume total de l'huile liquide.

8. Procédé selon la revendication 1, consistant en outre à, avant l'étape (C), séparer un ou plusieurs composants d'hydrocarbures des hydrocarbures ayant un point d'ébullition de 200°C à 350°C et des hydrocarbures ayant un point d'ébullition de 350°C à 570°C dans le gaz de pyrolyse produit à l'étape (B),
dans lequel les hydrocarbures ayant un point d'ébullition de 200°C à inférieur à 350°C incluent une huile intermédiaire en C₁₃₋₂₂ (MO), et les hydrocarbures ayant un point d'ébullition de 350°C à 570°C incluent une huile lourde en C₂₃₋₄₀ (HO).

9. Procédé selon la revendication 1, consistant en outre à, à l'étape (D), séparer en phase un composé de donneur d'hydrogène non réagi de l'huile liquide, et recycler le composé de donneur d'hydrogène non réagi séparé en phase comme le flux donneur d'hydrogène à l'étape (C).

10. Procédé selon la revendication 1, dans lequel la matière première de déchets plastiques est un mélange incluant un polyéthylène (PE) ou un polypropylène (PP).

11. Procédé selon la revendication 1, dans lequel une pression de fonctionnement interne de la tour de distillation de réaction est dans une plage de 1 bar à 20 bar.

12. Procédé selon la revendication 1, dans lequel la tour de distillation de réaction a une structure à plusieurs stades incluant 20 à 50 stades.

13. Procédé selon la revendication 1, dans lequel un flux de décharge inférieur incluant un résidu est déchargé par la partie inférieure de la tour de distillation de réaction, et une partie du flux de décharge inférieur est fractionnée et renvoyée à la tour de distillation de réaction.

14. Procédé selon la revendication 1, dans lequel l'étape (A) consiste à faire fondre la matière première de déchets plastiques, et
un flux gazeux non condensé à l'étape (D) est utilisé comme carburant pour faire fondre la matière première de déchets plastiques.
